# EUROPEAN PATENT SPECIFICATION

(11) **EP 3 515 841 B1**
(45) Date of publication and mention of the grant of the patent: **15.04.2020**
(21) Application number: 17787957.4
(22) Date of filing: 19.09.2017
(51) Int. Cl.: B65D 85/804

(54) **CAPSULE FOR MAKING BEVERAGES**
KAPSEL ZUR ZUBEREITUNG VON GETRÄNKEN
CAPSULE POUR LA PRODUCTION DES BOISSONS

(30) Priority: 23.09.2016 IT 201600095975
(43) Date of publication of application: 31.07.2019
(73) Proprietor: Caffitaly System S.P.A., 40041 Gaggio Montano (BO) (IT)
(72) Inventor: ACCURSI, Giovanni, 40046 Alto Reno Terme (Bologna) (IT)
(74) Representative: Ponchiroli, Simone
(86) International application number: PCT/IB2017/055660
(87) International publication number: WO 2018/055511

(56) References cited:
- EP-A1- 1 808 382
- WO-A1-2013/124811
- WO-A1-2013/189923
- WO-A1-2015/136433
- WO-A1-2016/111626
- WO-A2-2015/177591

## Description

This invention relates to a capsule for making beverages, of the type containing a powdered food substance that allows a beverage to be made by passing hot water through it. That food substance may be of the soluble type or of the type extractable by infusion (such as roasted and ground coffee).

In particular, this invention relates to a capsule of the type described in patents EP 1 472 156, EP 1 500 358, EP 1 574 452 EP1808382 and WO 2015/136433, that is to say, a capsule able to dispense a beverage directly into a cup below. That capsule comprises a cup-shaped containment body that has a bottom portion equipped with a dispensing hole, that is closed at the top by a closing element and inside which at least one lower filtering element is positioned between the powdered food substance and the bottom portion.

In this type of capsules, the capsules are usually made in such a way as to prevent the passage at least of oxygen towards the powdered food substance and so that at the moment when they are used the machine which uses them only pierces the upper closing element in order to inject water into the capsule. In contrast, the outflow of the beverage is achieved thanks to the fact that, inside them, the capsules comprise a barrier to oxygen made with a sheet of flexible material that, following the injection of water into the capsule, swells and tears against fixed contact elements present in the capsule. In particular, the lower filtering element is practically completely covered with pyramid-shaped spikes that allow tearing of the aluminium sheet that constitutes the barrier, as soon as the latter swells. In order to prevent the torn edges of the aluminium sheet from clogging the filtering element or even from coming out of the capsule (in fact, the many spikes present could reduce the sheet to shreds), in accordance with prior art solutions the filtering element only has openings along its periphery, at the contact zone with the inner wall of the containment body, that is to say, at zone of it relatively far from the pyramid-shaped spikes.

Furthermore, as already indicated, in these prior art capsules the beverage is dispensed directly from the capsule to the cup, that is to say, without contact with any part of the machine. For that purpose, the containment body of the capsule, which is injection moulded, comprises a ring that extends outwards and surrounds the dispensing hole, creating a sort of short tube for guiding the beverage as it flows out, guaranteeing its correct orientation towards the cup below.

In this context the primary technical purpose which forms the basis of this invention is to provide a capsule for making beverages which can be used in the same type of machines that use the capsules described above, but which is made in an alternative way to the prior art capsules.

In particular, the technical purpose of this invention is to provide a capsule for making beverages which uses an alternative opening method in terms of beverage dispensing.

The secondary technical purpose of this invention is to provide a capsule for making beverages in which the containment body can be made by thermoforming.

The technical purpose specified and the aims indicated are substantially achieved by a capsule for making beverages as described in the appended claims.

Further features and the advantages of this invention are more apparent in the detailed description below, with reference to several preferred, nonlimiting embodiments of a capsule for making beverages, illustrated in the accompanying drawings, in which:

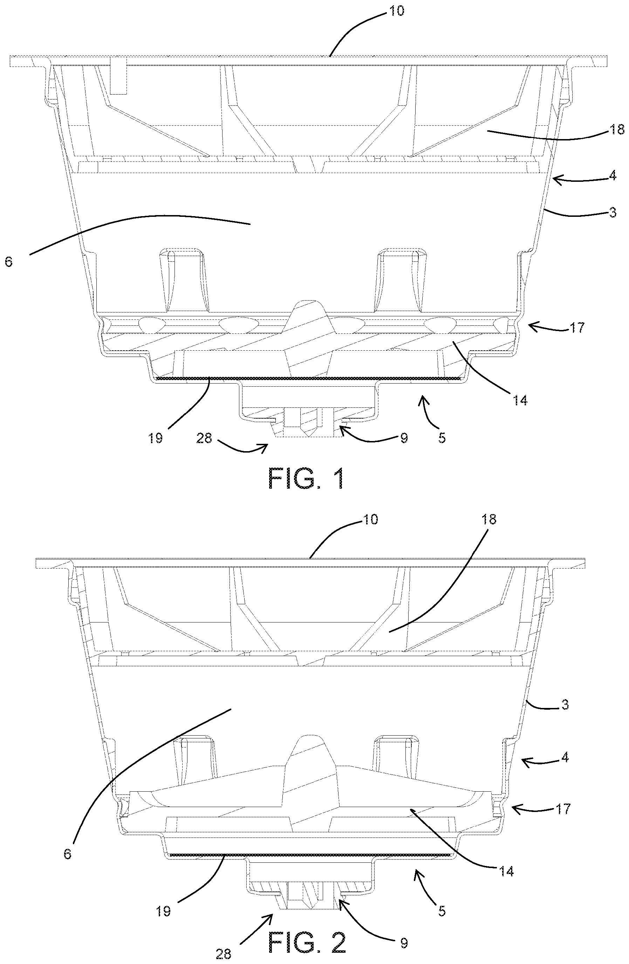

- Figure 1 is an axial section, without the powdered food substance to better illustrate its internal structure, of a capsule for making beverages made in accordance with a first embodiment of this invention;
- Figure 2 is an axial section, without the powdered food substance to better illustrate its internal structure, of a capsule for making beverages made in accordance with a second embodiment of this invention;

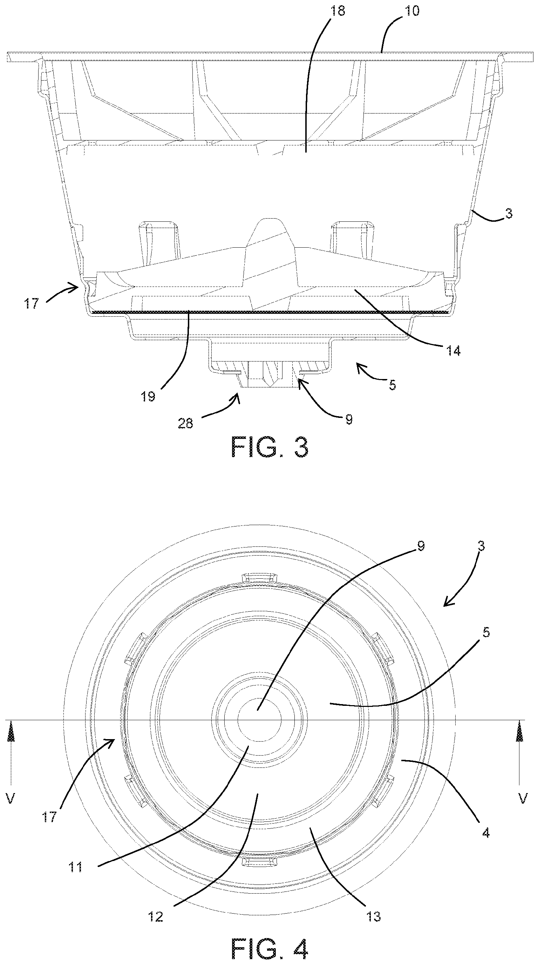

- Figure 3 is an axial section, without the powdered food substance to better illustrate its internal structure, of a capsule for making beverages made in accordance with a third embodiment of this invention;
- Figure 4 is a top view of the containment body of the capsules of Figures 1 to 3;

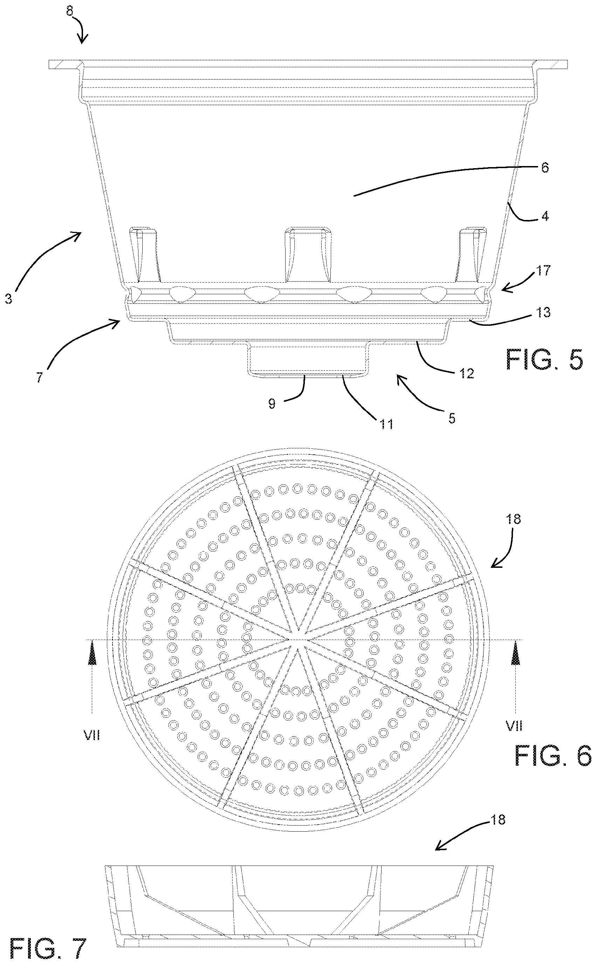

- Figure 5 is a side section view of the containment body of Figure 4 sectioned according to the line V - V;
- Figure 6 is a top view of the upper filtering element of the capsules of Figures 1 to 3;
- Figure 7 is a side section view of the upper filtering element of Figure 6 sectioned according to the line VII - VII;
- Figure 8 is a top view of the lower filtering element of the capsule of Figure 1;
- Figure 9 is a side section view of the lower filtering element of Figure 8 sectioned according to the line IX - IX;
- Figure 10 is a top view of the lower filtering element of the capsules of Figures 2 and 3;
- Figure 11 is a side section view of the lower filtering element of Figure 10 sectioned according to the line XI - XI;
- Figure 12 is a top view of a preferred embodiment of the sheet of flexible material present in the capsules of Figures 1 to 3;
- Figure 13 is an enlarged view of one of the four dispensing zones of the sheet of flexible material of Figure 12;
- Figure 14 is a vertical section view of the detail of the sheet of flexible material shown in Figure 13;
- Figure 15 is a vertical section view of the structure of the sheet of flexible material of Figure 12 in a zone other than the dispensing zone;
- Figure 16 is a vertical section view of an alternative embodiment of the sheet of flexible material at a dispensing zone similar to that shown in Figure 14;
- Figure 17 is a top view of the dispensing element of the capsules of Figures 1 and 2;
- Figure 18 is a side section view of the dispensing element of Figure 17 sectioned according to the line XVII - XVII;
- Figure 19 is a top view of the dispensing element of the capsule of Figure 3;
- Figure 20 is a side section view of the dispensing element of Figure 19 sectioned according to the line XX - XX; and
- Figure 21 is an axial section of the capsule of Figure 1 filled with the powdered food substance.

With reference to the above-mentioned figures, the numeral 1 denotes in its entirety a capsule made according to this invention.

Similarly to the prior art capsules, even the capsule 1 according to this invention may contain any powdered food substance 2 that allows a beverage to be made by passing hot water through it, whether it is of the soluble type or the type extractable by infusion (with more or less pressurised water - as described in more detail below, a predetermined extraction pressure always being required).

The capsule 1 comprises first a cup-shaped containment body 3, in which it is possible to identify a tubular lateral wall 4 and a bottom portion 5, and which forms a containment chamber 6 inside it. The tubular lateral wall 4 extends between a first edge 7 and a second edge 8. The bottom portion 5 is connected to the first edge 7 and extends transversally to a central axis of the tubular lateral wall 4 (the central axis also constituting a central axis for the capsule 1). The bottom portion 5 also comprises a dispensing hole 9, advantageously at a central zone of it. A closing element 10, such as a sheet of multi-layer material able to act as a barrier to oxygen, is fixed to the second edge 8 of the tubular lateral wall 4 to close the top of the containment body 3. The fixing is normally performed by sealing or gluing.

In the preferred embodiment, the tubular lateral wall 4 and the bottom portion 5 of the containment body 3 are made in a single piece, preferably using a material able to act as a barrier to oxygen, such as a moulded plastic material, or, preferably, a thermoformed multi-layer film.

In the preferred embodiment illustrated in the accompanying figures, the bottom portion 5 of the containment body 3 comprises an inner annular zone 11 that surrounds the dispensing hole 9, a middle annular zone 12 that surrounds the inner annular zone 11 and an outer annular zone 13 that surrounds the middle annular zone 12. The three zones are arranged in steps relative to each other, the inner annular zone 11 being further from the closing element 10 than the middle annular zone 12 and the middle annular zone 12 being further from the closing element 10 than the outer annular zone 13. Finally, the inner annular zone 11, the middle annular zone 12 and the outer annular zone 13 each form a supporting surface extending transversally relative to the central axis. The various supporting surfaces are advantageously concentric relative to the central axis.

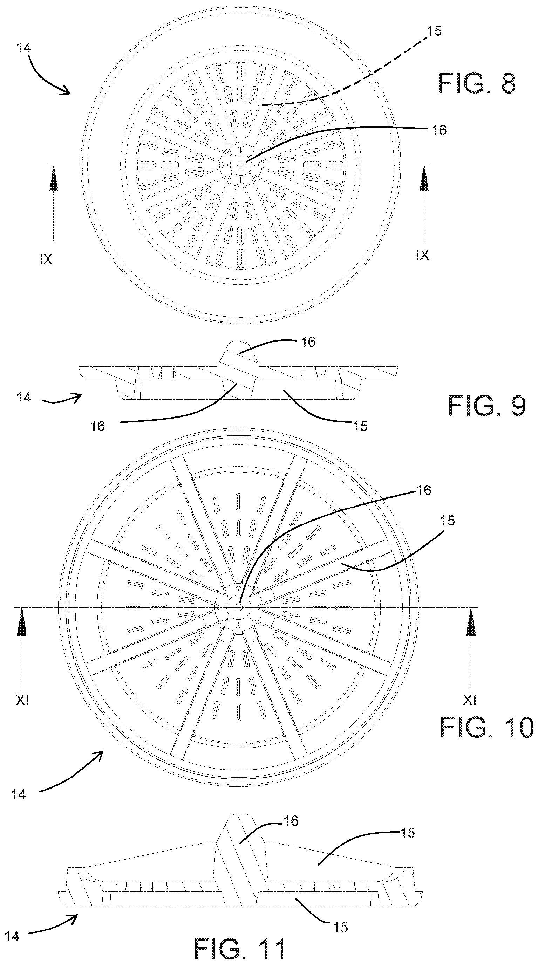

A lower filtering element 14 is mounted in the containment chamber 6, is positioned between the powdered food substance 2 and the bottom portion 5, and is preferably, but not necessarily, constituted of a rigid or semi-rigid plastic element equipped with a plurality of through holes. The accompanying figures show two example versions of it, both having both radial stiffening ribs 15 and a central bulge 16. In the first case, Figure 9, the ribs 15 are mainly located on the face of the lower filtering element 14 facing the bottom portion 5, whilst in the second case, Figure 11, they are mainly on the opposite face. In both cases the lower filtering element 14 rests on the outer annular zone 13 and is held in position by a shaped projection 17 made in the tubular lateral wall 4 (the lower filtering element 14 is inserted in the capsule 1 with a snap-in action).

Moreover, in the preferred embodiment, the capsule 1 also comprises an upper filtering element 18 positioned between the closing element 10 and the powdered food substance 2, the upper filtering element also advantageously constituted of a rigid or semi-rigid plastic element equipped with a plurality of holes and ribs, even if other solutions may be used.

Even the capsule 1 according to this invention, like the prior art capsules, also comprises a sheet of flexible material 19, impermeable to oxygen, mounted in the containment chamber 6 and fixed in an oxygen-tight way to the containment body 3 in order to seal in an oxygen-tight way the part of the capsule 1 that contains the powdered food substance 2.

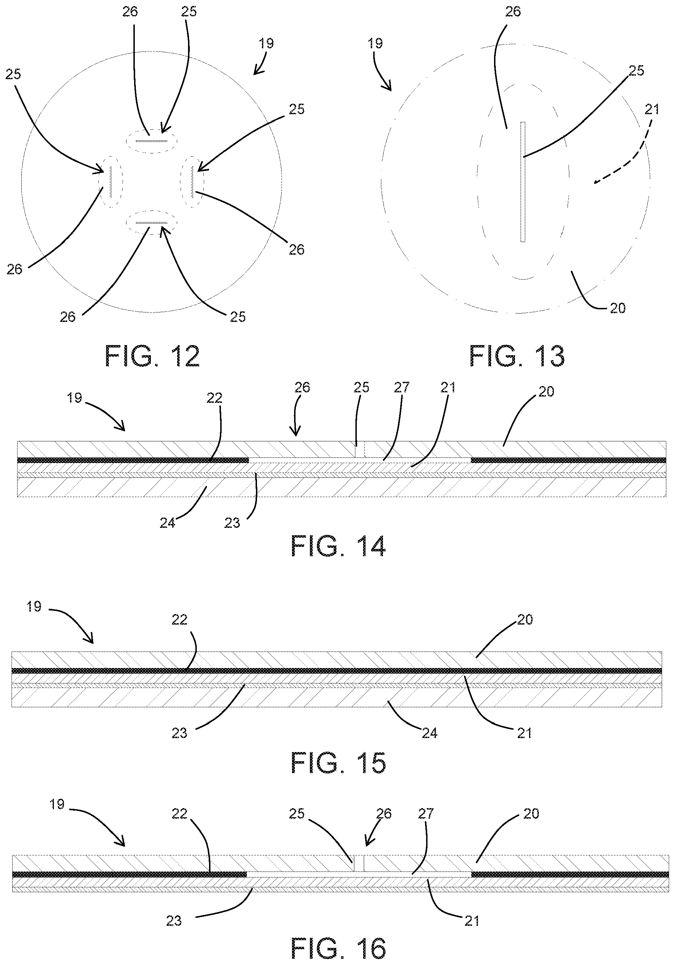

Advantageously, the sheet of flexible material 19 comprises at least one first layer 20 constituted of a film made of plastic material, preferably polyethylene or polyester, and one second layer 21 constituted of an aluminium film, which are coupled to each other. The sheet of flexible material 19 is also positioned between the powdered food substance 2 and the dispensing hole 9, with the first layer 20 interposed between the powdered food substance 2 and the second layer 21. In general, the sheet of flexible material 19 may also comprise a layer of adhesive 22 interposed between the first layer 20 and the second layer 21 to guarantee that they adhere to each other, and/or a layer of lacquer 23 applied to the second layer 21 on a face of it opposite to that facing the first layer 20. The embodiment comprising the four layers described above is illustrated in Figure 16. In other, more complex embodiments, the sheet of flexible material 19 may also comprise a layer 24 of intertwined plastic fibres, joined to the second layer 21 on the same side as the above-mentioned layer of lacquer 23, in such a way that the second layer 21 remains interposed between the first layer 20 and the layer 24 of intertwined plastic fibres. In particular, the layer 24 of intertwined plastic fibres is advantageously constituted of woven or non-woven polyester. This embodiment with five layers is illustrated in Figures 14 and 15.

In the preferred embodiment, the thicknesses of the various layers are as follows:
- polyethylene film: 10 µm ± 4 µm;
- layer of adhesive 22: 4 µm ± 2 µm;
- aluminium film: 7 µm ± 3 µm;
- layer of lacquer 23: 4 µm ± 2 µm;
- woven or non-woven polyester: 11 µm ± 3 µm.

In general, it is advantageously the case that the thickness of the layer of aluminium (second layer 21) is selected in such a way that the second layer 21 can tear autonomously when the difference in the pressure acting on its two faces is equal to at least 2 bar (at least at the dispensing zone described below).

Depending on the embodiments, the sheet of flexible material 19 is positioned either between the lower filtering element 14 and the dispensing hole 9 (preferred solution illustrated in the accompanying figures) or between the powdered food substance 2 and the lower filtering element 14 (less preferred solution). In the preferred embodiments, the sheet of flexible material 19 is fixed to the containment body 3 at the middle annular zone 12. Only its central zone is facing the inner annular zone 11 and the dispensing hole 9. In this case too, the fixing is normally performed by sealing or gluing. According to the main inventive aspect of this invention, the first layer 20 preferably comprises one or more cuts 25 (as illustrated in Figures 12 and 13) or alternatively one or more through openings (solution not illustrated). Both the cuts 25 and the through openings may be made with a laser beam (in this way, it is possible to make them when the first layer 20 and the second layer 21 are already coupled, thanks to the fact that by using a laser beam with suitable power it is possible to cut the polyethylene but not the aluminium, which simply reflects it). It should be noticed that in the above-mentioned figures the thickness of the cut 25 is shown larger than is necessary, in order to make it more obvious. In fact, in the preferred embodiments, whilst the length of the cut 25 is advantageously approximately several millimetres, preferably between 1 and 10 mm, the width of the cut 25 is approximately 0.5 to 1 mm.

As is schematically illustrated in Figures 12, 13, 14 and 16, each cut 25 or through opening present in the first layer 20 is made at and in a dispensing zone 26 of the first layer 20. Each dispensing zone 26 is characterised in that, at it, the first layer 20 is locally detached from the second layer 21 (for example, for that purpose advantageously the layer of adhesive 22 may be locally absent, as indicated by the empty area 27 in Figures 14 and 16). In fact, in this way, in use, after an overpressure has been established at the face of the first layer 20 facing the powdered food substance 2, the same pressure also acts on the second layer 21 at the dispensing zone 26, where the second layer 21 is locally free to swell, deforming towards the bottom portion 5 until it bursts.

Advantageously, all of the cuts 25 and the dispensing zones are made at the central zone of the sheet of flexible material 19.

Whilst, as already indicated, in general the containment body 3 may be made using any material and any method (for example by injection moulding), in accordance with a second innovative aspect of this invention the containment body 3 is made by thermoforming a plastic material that is a barrier to oxygen, with the dispensing hole 9 made by die cutting, and the capsule 1 also comprises a dispensing element 28 that is constituted of moulded plastic material and that is coupled to the dispensing hole 9.

In detail 25, the dispensing element 28 comprises a tubular main body 29 which is inserted through the dispensing hole 9 so that it projects towards the outside of the capsule 1, and which internally comprises an outfeed hole 30 for the beverage. The outfeed hole 30 connects the containment chamber 6 to the outside. The tubular main body 29 also comprises, advantageously, a radial flange 31 placed so that it is resting on the bottom portion 5 (in particular on the inner annular zone 11 in the embodiments illustrated). Depending on the embodiments, the dispensing element 28 may be mounted in the dispensing hole 9 either in a fluid-tight way or not.

Moreover, preferably, the dispensing element 28 comprises at least one undercut seat 32, relative to the central axis, in which a portion of the containment body 3, which delimits the dispensing hole 9, is inserted with a snap-in action.

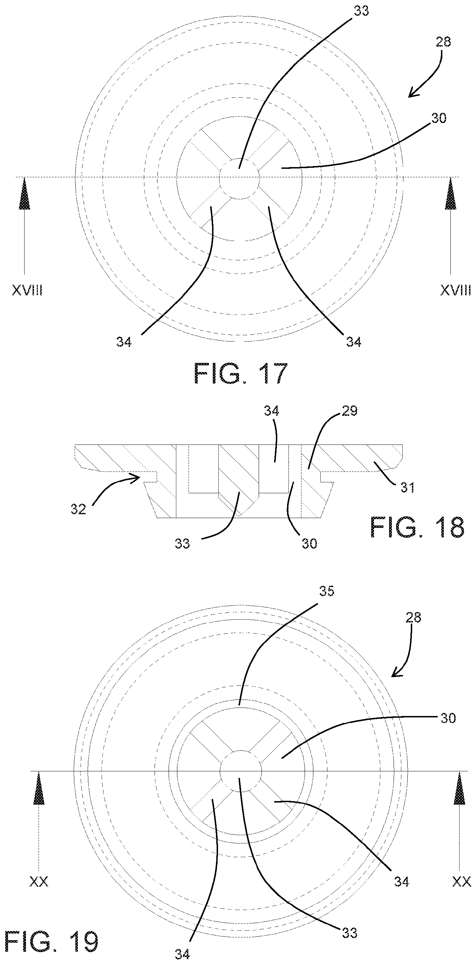

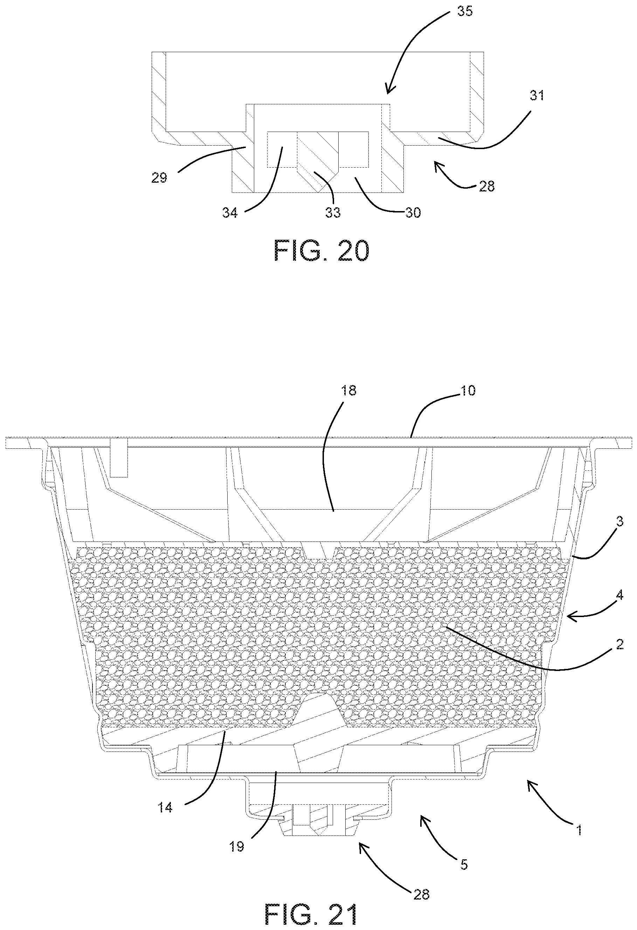

Furthermore, advantageously, the tubular main body 29 may comprise a guiding element 33 located in a central position of the outfeed hole 30 and supported by several supporting and centring arms 34. Preferably, the guiding element 33 has a tapered lower end (conical in the accompanying figures) to guarantee dispensing of the beverage along the central axis. Moreover, in the embodiment of Figures 19 and 20, on a side of it facing the lower filtering element 14, the dispensing element 28 also comprises a projecting annular edge 35 that surrounds the entrance of the outfeed hole 30 and that is able to obstruct the outflow of any residual drops of beverage present in the capsule 1 at the moment when the used capsule is removed from the extracting machine. A similar projecting annular edge 35 may also be present in the embodiment of Figures 17 and 18, and in any other embodiment of the dispensing element 28.

As regards operation of the capsule 1, when it is inserted in the coffee machine, the machine pierces the closing element 10 and injects pressurised water through the closing element 10. After passing through an upper filtering element 18, if present in the capsule 1, the water reaches the powdered food substance 2, and wets it, beginning the beverage making process, that is to say, dissolving of the powdered food substance 2 if it is soluble, or extraction of the aromatic substances if the powdered food substance 2 is not soluble.

The beverage formed then reaches the sheet of flexible material 19 that is still intact and is stopped by it. In particular, especially after the increase in pressure inside the capsule 1, the beverage goes into the one or more through holes or openings made in the first layer 20 and reaches the second layer 21 at the dispensing zones. The gradually established difference in the pressure acting on the face of the sheet of flexible material 19 facing the powdered food substance 2 and on the opposite face causes the second layer 21 to swell towards the bottom portion 5 at the one or more dispensing zones present, until the second layer 21 tears at one or more of the dispensing zones. It should be noticed that the different mechanical properties of the materials that constitute the first layer 20 and the second layer 21 mean that, whilst the second layer 21 tears following the increase in pressure, the first layer 20 remains substantially undamaged.

At that point, the beverage is free to continue on its path towards the outfeed hole 30. If it is present, the beverage in particular reaches the dispensing element 28, where it goes into the outfeed hole 30, preferably following the guiding element 33 along its length, to reach the cup below.

It should be noticed that, during the outfeed path, the beverage also passes through the lower filtering element 14. Depending on the embodiments, that may occur either before the beverage passes through the sheet of flexible material 19 or after the beverage has passed through it.

Finally, if the sheet of flexible material 19 comprises through cuts 25 that have a reduced transversal width (measuring approximately 0.5 to 1 mm), thanks to the elasticity of the polypropylene during dispensing, those cuts 25 can guarantee that the pressure inside the capsule 1 remains constant (the cuts stretch wider open if the pressure increases and become narrower if the pressure drops), thereby guaranteeing improved beverage extraction, particularly in the case of a powdered food substance 2 that is not soluble.

This invention brings important advantages.

Moreover, in fact, thanks to this invention it has been possible to provide an alternative capsule to the prior art capsules. This alternative capsule can be used in the same machines that currently use the prior art capsules described above, but improved results have even been achieved.

First, thanks to the innovative sheet of flexible material used, it has been possible to provide a capsule opening system that is not just an alternative to the prior art system, but that allows both opening with pressures higher than those at which opening occurs in prior art capsules, and a reduced risk of unwanted release of pieces of aluminium in the beverage, thanks to the absence of mechanical piercing elements that interact with the aluminium sheet.

Moreover, as already indicated, in the preferred embodiment in which the sheet of flexible material comprises through cuts that have a reduced transversal width, it is possible to guarantee improved beverage extraction. Second, in the case of the preferred embodiment, thanks to the use of the additional dispensing element, it has been possible to use thermoformed containment bodies in place of the injection moulded bodies used until now. Finally, it should be noticed that this invention is relatively easy to produce and that even the cost linked to implementing the invention is not very high.

## Claims

1. A capsule for making beverages, containing a powdered food substance (2) which allows a beverage to be made by passing hot water through it, the capsule (1) comprising:
a cup-shaped containment body (3) in turn comprising a tubular lateral wall (4) extending between a first edge (7) and a second edge (8), and a bottom portion (5) connected to the first edge (7) and extending transversally to a central axis of the tubular lateral wall (4), the bottom portion (5) comprising a dispensing hole (9), and the containment body (3) defining a containment chamber (6) inside itself;
a closing element (10) fixed to the second edge (8) for closing the top of the containment body (3);
a lower filtering element (14) mounted in the containment chamber (6) and positioned between the powdered food substance (2) and the bottom portion (5); and
a sheet of flexible material (19), impermeable to oxygen, mounted in the containment chamber (6) and fixed in an oxygen-tight way to the containment body (3), the sheet of flexible material (19) comprising at least one first layer (20) constituted of a film made of plastic material and one second layer (21) constituted of an aluminium film, which are coupled to each other, and the sheet of flexible material (19) also being positioned between the powdered food substance (2) and the dispensing hole (9) with the first layer (20) interposed between the powdered food substance (2) and the second layer (21);
**characterised in that** the first layer (20) comprises one or more cuts (25) or through openings, and **in that** for each of said cuts (25) or through openings the first layer (20) comprises a dispensing zone (26) that surrounds the related cut (25) or through opening, the first layer (20) being locally detached from the second layer (21) at each dispensing zone (26), for allowing at each dispensing zone (26) the second layer (21) to swell towards the bottom portion (5) until it bursts after an increase in pressure on the side of the first layer (20) facing the powdered food substance (2).

2. The capsule according to claim 1, **characterised in that** the sheet of flexible material (19) also comprises a layer of adhesive (22) interposed between the first layer (20) and the second layer (21) and/or a layer of lacquer (23) applied to the second layer (21) on a side opposite to that facing the first layer (20).

3. The capsule according to claim 1 or 2, **characterised in that** the sheet of flexible material (19) also comprises a layer (24) of intertwined plastic fibres, the second layer (21) being interposed between the first layer (20) and the layer (24) of intertwined plastic fibres.

4. The capsule according to claim 3, **characterised in that** the layer (24) of intertwined plastic fibres is constituted of woven or non-woven polyester.

5. The capsule according to any of the preceding claims, **characterised in that** the first layer (20) is constituted of polyethylene.

6. The capsule according to any of the preceding claims, **characterised in that** the bottom portion (5) of the containment body (3) comprises an inner annular zone (11) that surrounds the dispensing hole (9), a middle annular zone (12) that surrounds the inner annular zone (11) and an outer annular zone (13) that surrounds the middle annular zone (12), the inner annular zone (11) being further from the closing element (10) than the middle annular zone (12) and the middle annular zone (12) being further from the closing element (10) than the outer annular zone (13); the inner annular zone (11), the middle annular zone (12) and the outer annular zone (13) each forming a supporting surface extending transversally relative to the central axis; the lower filtering element (14) resting on the outer annular zone (13) and the sheet of flexible material (19) being fixed to the containment body (3) at the middle annular zone (12).

7. The capsule according to any of the preceding claims, **characterised in that** the sheet of flexible material (19) is positioned between the lower filtering element (14) and the dispensing hole (9).

8. The capsule according to any of claims 1 to 6, **characterised in that** the sheet of flexible material (19) is positioned between the powdered food substance (2) and the lower filtering element (14).

9. The capsule according to any of the preceding claims, **characterised in that** it also comprises an upper filtering element (18) positioned between the closing element (10) and the powdered food substance (2).

10. The capsule according to claim 9, **characterised in that** the upper filtering element (18) is constituted of a rigid or semi-rigid plastic element.

11. The capsule according to any of the preceding claims, **characterised in that** the lower filtering element (14) is constituted of a rigid or semi-rigid plastic element.

12. The capsule according to any of the preceding claims, **characterised in that** the containment body (3) is made by thermoforming, **in that** it also comprises a dispensing element (28) constituted of moulded plastic material, and **in that** the dispensing element (28) comprises a tubular main body (29) which is inserted through the dispensing hole (9) and which internally comprises an outfeed hole (30) for the beverage that connects the containment chamber (6) to the outside.

13. The capsule according to claim 12, **characterised in that** the dispensing element (28) is mounted in the dispensing hole (9) in a fluid-tight way.

14. The capsule according to claim 12 or 13, **characterised in that** the dispensing element (28) comprises at least one undercut seat (32) relative to the central axis and **in that** a portion of the containment body (3), which delimits the dispensing hole (9), is inserted in the undercut seat (32) with a snap-in action.

15. The capsule according to any of claims 12 to 14, **characterised in that** the tubular main body (29) also comprises a guiding element (33) located in a central position of the outfeed hole (30).

16. The capsule according to claim 6 and any of claims 12 to 15, **characterised in that** the tubular main body (29) is positioned resting on the inner annular zone (11).

17. The capsule according to any of claims 12 to 16, **characterised in that**, on a side of it facing the lower filtering element (14), the dispensing element (28) also comprises a projecting annular edge (35) that surrounds an entrance of the outfeed hole (30).

## Patentansprüche

1. Eine Kapsel zur Zubereitung von Getränken, ein pulverförmiges Lebensmittel (2) enthaltend, das es erlaubt, ein Getränk zuzubereiten, indem heißes Wasser durch es geleitet wird, die Kapsel (1) umfasst dabei Folgendes:
einen tassenförmigen Behälterkörper (3), der seinerseits eine rohrförmige Seitenwand (4), die sich zwischen einer ersten Kante (7) und einer zweiten Kante (8) erstreckt, und einen Bodenabschnitt (5), der mit der ersten Kante (7) verbunden ist und sich quer zu einer zentralen Achse (4) der rohrförmigen Seitenwand (4) erstreckt, umfasst, der Bodenabschnitt (5) umfasst dabei eine Ausgabeöffnung (9), und der Behälterkörper (3) grenzt dabei in sich selbst eine Behälterkammer (6) ab;
ein Schließelement (10), das an der zweiten Kante (8) befestigt ist, um die Oberseite des Behälterkörpers (3) zu schließen;
ein unteres Filterelement (14), das in der Behälterkammer (6) montiert ist und zwischen dem pulverförmigen Lebensmittel (2) und dem Bodenabschnitt (5) positioniert ist; und
ein Blatt aus einem sauerstoffundurchlässigen, biegsamen Material (19), das in der Behälterkammer (6) montiert und sauerstoffdicht am Behälterkörper (3) befestigt ist, das Blatt aus biegsamem Material (19) umfasst dabei mindestens eine erste Schicht (20), die aus einer Folie besteht, die aus Kunststoff gefertigt ist, und eine zweite Schicht (21), die aus einer Aluminiumfolie besteht, diese sind miteinander verbunden und das Blatt aus biegsamem Material (19) ist dabei außerdem zwischen dem pulverförmigen Lebensmittel (2) und der Ausgabeöffnung (9) positioniert, wobei sich die erste Schicht (20) zwischen dem pulverförmigen Lebensmittel (2) und der zweiten Schicht (21) befindet;
**gekennzeichnet dadurch, dass** die erste Schicht (20) einen oder mehrere Einschnitte (25) oder durchgehende Öffnungen enthält, und dass die erste Schicht (20) für jeden der besagten Einschnitte (25) oder durchgehenden Öffnungen einen Ausgabebereich (26) umfasst, der den entsprechenden Einschnitt (25) oder die entsprechende durchgehende Öffnung umgibt, die erste Schicht (20) ist dabei in jedem Ausgabebereich (26) örtlich von der zweiten Schicht (21) abgelöst, um zu erlauben, dass sich die zweite Schicht (21) in jedem Ausgabebereich (26) in Richtung des Bodenabschnitts (5) wölben kann, bis sie nach einer Zunahme des Drucks auf der Seite der ersten Schicht (20), die zu dem pulverförmigen Lebensmittel (2) gerichtet ist, birst.

2. Die Kapsel nach dem Patentanspruch 1, **gekennzeichnet dadurch, dass** das Blatt aus biegsamem Material (19) außerdem eine Schicht aus Klebstoff (22) umfasst, die sich zwischen der ersten Schicht (20) und der zweiten Schicht (21) befindet, und/oder eine Lackschicht (23), die auf einer Seite, die derjenigen, welche zur ersten Schicht (20) gerichtet ist, entgegengesetzt ist, auf der zweiten (21) Schicht aufgebracht ist.

3. Die Kapsel nach dem Patentanspruch 1 oder 2, **gekennzeichnet dadurch, dass** das Blatt aus biegsamem Material (19) außerdem eine Schicht (24) aus miteinander verwobenen Kunststofffasern umfasst, dabei befindet sich die zweite Schicht (21) zwischen der ersten Schicht (20) und der Schicht (24) aus miteinander verwobenen Kunststofffasern.

4. Die Kapsel nach dem Patentanspruch 3, **gekennzeichnet dadurch, dass** die Schicht (24) der miteinander verwobenen Kunststofffasern aus gewobenem Polyester oder aus Polyestervlies besteht.

5. Die Kapsel nach jedem der vorherigen Patentansprüche, **gekennzeichnet dadurch, dass** die erste Schicht (20) aus Polyäthylen besteht.

6. Die Kapsel nach jedem der vorherigen Patentansprüche, **gekennzeichnet dadurch, dass** der Bodenabschnitt (5) des Behälterkörpers (3) einen inneren ringförmigen Bereich (11), der die Ausgabeöffnung (9) umgibt, einen mittleren ringförmigen Bereich (12), der den inneren ringförmigen Bereich (11) umgibt, und einen äußeren ringförmigen Bereich (13), der den mittleren ringförmigen Bereich (12) umgibt, umfasst, der innere ringförmige Bereich (11) ist dabei weiter vom Schließelement (10) entfernt als der mittlere ringförmige Bereich (12) und der mittlere ringförmige Bereich (12) ist dabei weiter vom Schließelement (10) entfernt als der äußere ringförmige Bereich (13); der innere ringförmige Bereich (11), der mittlere ringförmige Bereich (12) und der äußere ringförmige Bereich (13) bilden dabei jeweils eine Stützfläche, die sich quer zur zentralen Achse erstreckt; das untere Filterelement (14) liegt dabei auf dem äußeren ringförmigen Bereich (13) und das Blatt aus biegsamem Material (19) ist dabei im mittleren ringförmigen Bereich (12) am Behälterkörper (3) befestigt.

7. Die Kapsel nach jedem der vorherigen Patentansprüche, **gekennzeichnet dadurch, dass** sich das Blatt aus biegsamem Material (19) zwischen dem unteren Filterelement (14) und der Ausgabeöffnung (9) befindet.

8. Die Kapsel nach jedem der Patentansprüche 1 bis 6, **gekennzeichnet dadurch, dass** sich das Blatt aus biegsamem Material (19) zwischen dem pulverförmigen Lebensmittel (2) und dem unteren Filterelement (14) befindet.

9. Die Kapsel nach jedem der vorherigen Patentansprüche, **gekennzeichnet dadurch, dass** sie außerdem ein oberes Filterelement (18) umfasst, das sich zwischen dem Schließelement (10) und dem pulverförmigen Lebensmittel (2) befindet.

10. Die Kapsel nach dem Patentanspruch 9, **gekennzeichnet dadurch, dass** das obere Filterelement (18) aus einem starren oder halbstarren Kunststoffelement besteht.

11. Die Kapsel nach jedem der vorherigen Patentansprüche, **gekennzeichnet dadurch, dass** das untere Filterelement (14) aus einem starren oder halbstarren Kunststoffelement besteht.

12. Die Kapsel nach jedem der vorherigen Patentansprüche, **gekennzeichnet dadurch, dass** der Behälterkörper (3) durch Thermoformung hergestellt wurde, dadurch, dass er außerdem ein Ausgabeelement (28) umfasst, das aus geformtem Kunststoff besteht, und dadurch, dass das Ausgabeelement (28) einen rohrförmigen Hauptkörper (29) umfasst, der durch die Ausgabeöffnung (9) eingesetzt ist und der im Inneren eine Auslassöffnung (30) für das Getränk enthält, die die Behälterkammer (6) mit dem Außenbereich verbindet.

13. Die Kapsel nach dem Patentanspruch 12, **gekennzeichnet dadurch, dass** das Ausgabeelement (28) flüssigkeitsdicht an der Ausgabeöffnung (9) montiert ist.

14. Die Kapsel nach dem Patentanspruch 12 oder 13, **gekennzeichnet dadurch, dass** das Ausgabeelement (28) mindestens einen in Bezug zur zentralen Achse unterschnittenen Sitz (32) umfasst und dadurch, dass ein Anteil des Behälterkörpers (3), der die Ausgabeöffnung (9) abgrenzt, durch Einrasten in den unterschnittenen Sitz (32) eingefügt wird.

15. Die Kapsel nach jedem der Patentansprüche 12 bis 14, **gekennzeichnet dadurch, dass** der röhrenförmige Hauptkörper (29) außerdem ein Führungselement (33) umfasst, das sich an einer zentralen Stelle der Ausgabeöffnung (30) befindet.

16. Die Kapsel nach dem Patentanspruch 6 und nach jedem der Patentansprüche 12 bis 15, **gekennzeichnet dadurch, dass** der röhrenförmige Hauptkörper (29) so platziert ist, dass er auf dem inneren ringförmigen Bereich (11) liegt.

17. Die Kapsel nach jedem der Patentansprüche 12 bis 16, **gekennzeichnet dadurch, dass** das Ausgabeelement (28) an einer seiner Seiten, die zum unteren Filterelement (14) gerichtet ist, außerdem eine herausragende ringförmige Kante (35) beinhaltet, die einen Eingang der Ausgabeöffnung (30) umgibt.

## Revendications

1. Une capsule pour la réalisation de boissons, contenant une substance alimentaire en poudre (2) qui permet de réaliser une boisson en faisant passer de l'eau chaude à travers elle, la capsule (1) comprenant :
un corps-contenant (3) en forme de coupe comprenant à son tour une paroi latérale tubulaire (4) s'étendant entre un premier bord (7) et un deuxième bord (8), et une portion de fond (5) raccordée au premier bord (7) et s'étendant transversalement à un axe central de la paroi latérale tubulaire (4), la portion de fond (5) comprenant un trou de distribution (9), et le corps-contenant (3) définissant une chambre-contenant (6) à l'intérieur de lui-même ;
un élément de fermeture (10) fixé au deuxième bord (8) pour fermer le dessus du corps-contenant (3) ;
un élément filtrant inférieur (14) monté dans la chambre-contenant (6) et positionné entre la substance alimentaire en poudre (2) et la portion de fond (5) ; et
une feuille de matériau flexible (19), imperméable à l'oxygène, montée dans la chambre-contenant (6) et fixée de façon étanche à l'oxygène au corps-contenant (3), la feuille de matériau flexible (19) comprenant au moins une première couche (20) constituée d'un film réalisé en matière plastique et une deuxième couche (21) constituée d'un film d'aluminium, qui sont accouplés l'un avec l'autre, et la feuille de matériau flexible (19) étant également positionnée entre la substance alimentaire en poudre (2) et le trou de distribution (9) avec la première couche (20) interposée entre la substance alimentaire en poudre (2) et la deuxième couche (21) ;
**caractérisée en ce que** la première couche (20) comprend une ou plusieurs entailles (25) ou ouvertures traversantes, et **en ce que** pour chacune desdites entailles (25) ou ouvertures traversantes la première couche (20) comprend une zone de distribution (26) qui entoure l'entaille (25) ou ouverture traversante correspondante, la première couche (20) étant localement détachée de la deuxième couche (21) au niveau de chaque zone de distribution (26) pour permettre, au niveau de chaque zone de distribution (26), à la deuxième couche (21) de se gonfler vers la portion de fond (5) jusqu'à ce qu'elle éclate suite à une augmentation de la pression du côté de la première couche (20) faisant face à la substance alimentaire en poudre (2).

2. La capsule selon la revendication 1, **caractérisée en ce que** la feuille de matériau flexible (19) comprend aussi une couche d'adhésif (22) interposée entre la première couche (20) et la deuxième couche (21) et/ou une couche de laque (23) appliquée à la deuxième couche (21) sur un côté opposé à celui qui fait face à la première couche (20).

3. La capsule selon la revendication 1 ou 2, **caractérisée en ce que** la feuille de matériau flexible (19) comprend aussi une couche (24) de fibres plastiques entrelacées, la deuxième couche (21) étant interposée entre la première couche (20) et la couche (24) de fibres plastiques entrelacées.

4. La capsule selon la revendication 3, **caractérisée en ce que** la couche (24) de fibres plastiques entrelacées est constituée de polyester tissé ou non tissé.

5. La capsule selon l'une quelconque des revendications précédentes, **caractérisée en ce que** la première couche (20) est constituée de polyéthylène.

6. La capsule selon l'une quelconque des revendications précédentes, **caractérisée en ce que** la portion de fond (5) du corps-contenant (3) comprend une zone annulaire intérieure (11) qui entoure le trou de distribution (9), une zone annulaire intermédiaire (12) qui entoure la zone annulaire intérieure (11) et une zone annulaire extérieure (13) qui entoure la zone annulaire intermédiaire (12), la zone annulaire intérieure (11) étant plus éloignée de l'élément de fermeture (10) que la zone annulaire intermédiaire (12) et la zone annulaire intermédiaire (12) étant plus éloignée de l'élément de fermeture (10) que la zone annulaire extérieure (13) ; la zone annulaire intérieure (11), la zone annulaire intermédiaire (12) et la zone annulaire extérieure (13) formant chacune une surface de support s'étendant transversalement par rapport à l'axe central ; l'élément filtrant inférieur (14) reposant sur la zone annulaire extérieure (13) et la feuille de matériau flexible (19) étant fixée au corps-contenant (3) au niveau de la zone annulaire intermédiaire (12).

7. La capsule selon l'une quelconque des revendications précédentes, **caractérisée en ce que** la feuille de matériau flexible (19) est positionnée entre l'élément filtrant inférieur (14) et le trou de distribution (9).

8. La capsule selon l'une quelconque des revendications de 1 à 6, **caractérisée en ce que** la feuille de matériau flexible (19) est positionnée entre la substance alimentaire en poudre (2) et l'élément filtrant inférieur (14).

9. La capsule selon l'une quelconque des revendications précédentes, **caractérisée en ce qu'**elle comprend aussi un élément filtrant supérieur (18) positionné entre l'élément de fermeture (10) et la substance alimentaire en poudre (2).

10. La capsule selon la revendication 9, **caractérisée en ce que** l'élément filtrant supérieur (18) est constitué d'un élément plastique rigide ou semi-rigide.

11. La capsule selon l'une quelconque des revendications précédentes, **caractérisée en ce que** l'élément filtrant inférieur (14) est constitué d'un élément plastique rigide ou semi-rigide.

12. La capsule selon l'une quelconque des revendications précédentes, **caractérisée en ce que** le corps-contenant (3) est réalisé par thermoformage, **en ce qu'**elle comprend aussi un élément de distribution (28) constitué de matière plastique moulée, et **en ce que** l'élément de distribution (28) comprend un corps principal tubulaire (29) qui est inséré à travers le trou de distribution (9) et qui comprend intérieurement un trou de sortie (30) pour la boisson qui relie la chambre-contenant (6) avec l'extérieur.

13. La capsule selon la revendication 12, **caractérisée en ce que** l'élément de distribution (28) est monté dans le trou de distribution (9) de façon étanche au fluide.

14. La capsule selon la revendication 12 ou 13, **caractérisée en ce que** l'élément de distribution (28) comprend au moins un logement en contre-dépouille (32) par rapport à l'axe central et **en ce qu'**une portion du corps-contenant (3), qui délimite le trou de distribution (9), est insérée dans le logement en contre-dépouille (32) par une action d'emboîtement.

15. La capsule selon l'une quelconque des revendications de 12 à 14, **caractérisée en ce que** le corps principal tubulaire (29) comprend aussi un élément de guidage (33) situé dans une position centrale du trou de sortie (30).

16. La capsule selon la revendication 6 et l'une quelconque des revendications de 12 à 15, **caractérisée en ce que** le corps principal tubulaire (29) est positionné en appui sur la zone annulaire intérieure (11).

17. La capsule selon l'une quelconque des revendications de 12 à 16, **caractérisée en ce que**, sur un côté respectif faisant face à l'élément filtrant inférieur (14), l'élément de distribution (28) comprend aussi un bord annulaire en saillie (35) qui entoure une entrée du trou de sortie (30).
